# EUROPÄISCHE PATENTANMELDUNG

(11) **EP 1 871 047 A1**
(43) Veröffentlichungstag der Anmeldung: **26.12.2007**
(21) Anmeldenummer: 06115744.2
(22) Anmeldetag: 20.06.2006
(51) Int. Cl.: H04L 12/56, H04L 29/06

(54) **Verfahren, Vorrichtungen und Computersoftware zur Ermittlung von Topologie-Referenzinformationen und zum Etablieren einer Verbindung in einem Kommunikationssystem**

(71) Anmelder: Alcatel Lucent, 75008 Paris (FR)
(72) Erfinder: Voith, Thomad, D-70806, Kornwestheim (DE); Riemer, Joachim, D-70499, Stuttgart (DE)
(74) Vertreter: Rausch, Gabriele

(57) **Zusammenfassung**

Die Erfindung betrifft ein Verfahren zum Ermitteln von Topologie-Referenzinformation (TRI) einer Verbindung, die von einem Endgerät über ein Netz von Anchor Points geroutet wird, wobei auf einem Verbindungspfad Information über verwendete Anchor Points als Topologie-Referenzinformation (TRI) aggregiert werden.

Verbindungs-Transparenz wird durch ein Verfahren zum Etablieren einer Verbindung erreicht, wobei ein Anchor Point anhand von Topologie-Referenzinformation (TRI) identifiziert und ausgewählt wird, wobei die Topologie-Referenzinformation (TRI) im Endgerät oder im Netz vorgehalten wird und Information über eine bereits etablierte Verbindung bereitstellt. Die Erfindung betrifft weiter ein Kommunikationssystem, einen Netzwerkknoten, ein Endgerät, ein Server-System und ein Computer Software Produkt dazu.

## Beschreibung

Die Erfindung betrifft ein Verfahren zum Etablieren einer Verbindung unter Verwendung von Topologie-Referenzinformation und ein Verfahren zum Ermitteln von Topologie-Referenzinformation einer Verbindung, sowie ein Kommunikationssystem, ein Netzwerkknoten, ein Endgerät, ein Server-System und ein Computer Software Produkt dazu.

Telekommunikationsgeräte werden in modernen Telekommunikationsinfrastrukturen wie Internet Multimedia Subsystem oder den Next Generation Networks (NGN) oder einem Peer to Peer Network mit einer extrem heterogenen Umgebung und Kontexten konfrontiert.

Um die Komplexität der Infrastruktur handhaben zu können werden Verbindungen im allgemeinen signalisiert.

Es wäre wünschenswert, wenn bei einem Verbindungsverlust (wie beispielsweise durch ein Mobility-Szenario) das Netzwerk oder die verschiedenen Netzwerke das Szenario (also einen Verbindungswechsel) gegenüber einer Applikation oder einem Benutzer transparent erscheinen lassen. Unabhängig von tieferen Schichten, wie beispielsweise einem Access Technologiewechsel, soll eine Session erhalten bleiben bzw. restauriert und wiederaufgenommen werden.

In der Enzyklopädie Webopedia Online Encyclopedia, http://www.webopedia.com/TERM/M/Mobile_IP.html findet man Definitionen zum Mobility-Begriff. Ebenso sind diese Begriffe in einer Vielzahl von Standardisierungen definiert, wie beispielsweise in der ITU-T Recommendation Q.1703: Service and network capabilities framework of network aspects for systems beyond IMT-2000. Geneva, 2004, in ETSI: TISPAN_NGN; Release 1: Release Definition. ETSI TR 180 001 V1.1.1 (2006-03), in 3GPP: Reply LS on Technical Report on Mobility between H.323 Multimedia Systems andGPRS/IMT2000 Networks. TSGS#23(04)0026, Atlanta, February 2004, oder in FGNGN: Mobility management capability requirements for NGN, now in scope of ITU-T SG 13/19 [FGNGN-OD-00246r1] FRMOB (discontinued)

In der neuen Internet Protocol Multimedia Subsystem Architektur (IMS), die von dem European Telecommunications Standards Institute (ETSI) und dem Parlay Forum definiert ist, wird von drei Schichten gesprochen: dem Application Session Layer, dem Session Control Layer und dem Transport und Endpoint Layer.

Die Erfindung ermöglicht es in so einer Umgebung wie IMS Mobility Szenarien transparent zu handhaben.

Das wird durch ein Verfahren zum Ermitteln von Topologie-Referenzinformation einer Verbindung, die von einem Endgerät über ein Netz von Anchor Points geroutet wird, erreicht, wobei auf einem Verbindungspfad Information über verwendete Anchor Points als Topologie-Referenzinformation aggregiert werden.

Die Transparenz wird durch ein Verfahren zum Etablieren einer Verbindung erreicht, wobei ein Anchor Point / Netzübergang anhand von Topologie-Referenzinformation identifiziert und ausgewählt wird, wobei die Topologie-Referenzinformation im Endgerät oder im Netz vorgehalten wird und Information über eine bereits etablierte Verbindung bereitstellt.

Das Problem wird in einem Kommunikationssystem mit einem Endgerät und ein Netz von Anchor Points dadurch gelöst, dass das Kommunikationssystem Mittel zum Aggregieren von Topologie-Referenzinformation einer Verbindung, die von einem Endgerät über das Netz von Anchor Points geroutet wird, aufweist, wobei die Mittel so ausgestaltet sind, dass auf einem Verbindungspfad Information über verwendete Anchor Points als Topologie-Referenzinformation aggregiert werden, und dass die Mittel zum Identifizieren und Auswählen eines Anchor Point oder eines Domänenüberganges anhand der Topologie-Referenzinformation geeignet sind.

Entsprechend wird das Problem durch einen Netzwerkknoten gelöst, der Mittel zum Bestimmen von Topologie-Referenzinformation einer Verbindung, die von einem Endgerät über den Anchor Point geroutet werden, aufweist, wobei die Mittel derart ausgestaltet sind, dass auf einem Verbindungspfad Information über verwendete Anchor Points als Topologie-Referenzinformation aggregiert werden.

Ebenso wird das Problem durch ein Endgerät oder Server-System gelöst, dass Mittel zum Vorhalten von Topologie-Referenzinformation einer Verbindung aufweist.

Und ein Computer Software Produkt umfassend Programmiermittel zum Ausführen des Verfahrens löst das Problem.

Der Erfindung liegt der Gedanke zugrunde von den konkreten Netzwerkentitäten im folgenden Points oder Nodes oder auch die Agents oder Peers zu abstrahieren und die durch etablierte Verbindungen induzierte Topologie, meist ein Pfad, intelligent vorzuhalten. D. h., während des operationellen Betriebes wird üblicherweise opake topologische Referenz-Information gesammelt, beispielsweise während der Registrierung oder der Authentifizierung, währen eines der Etablierung einer Session oder während einer andauernden Session.

Durch die dynamischen Verbindungsrelation zwischen den Knoten wird eine Netztopologie definiert, in der die Netzknoten miteinander in Verbindung (Nachbarschafts-Relation) stehen. Netzknoten sind dabei reale Objekte wie ein Session Border Controller oder ein Call Server oder Media Gateway Controller, ein Endgerät o.ä. Die Verbindungsrelation zwischen den Netzknoten spiegelt reale Verbindungen wieder. Übergänge zwischen Domänen spielen in der Topologie eine besondere Rolle.

Die Erfindung hat den Vorteil, dass das Konzept sowie die Realisierung bei heterogenen Netzwerkinfrastrukturen anwendbar ist, wie insbesondere IMS oder andere NGN oder den Peer-to-Peer (P2P) Netzen, in denen alle Knoten gleichberechtigt sind und sowohl Dienste in Anspruch nehmen können als auch Dienste zur Verfügung stellen können. Das P2P-Prinzip ist das Gegenteil zum Client-Server-Prinzip. Hier gibt es den Server, der einen Dienst anbietet, und den Client, der diesen Dienst nutzt. In Peer-to-Peer-Netzen ist diese Rollenverteilung aufgehoben.

Die Verwendung von Topologie-Referenzinformation ist optional, so dass die vorhandene Netzwerkinfrastruktur weiter verwendbar bleibt ohne angepasst werden zu müssen. Optional sollte eine Netzwerkinfrastruktur Topologieinformationen transparent durchreichen können. Ein besonderer Vorteil ist, dass bei der Erfindung die Vorbereitung für Mobility hauptsächlich dezentral auf Session Control Layer läuft und der Application Session Layer nur zum Vorhalten der Informationen als Leaf Agent notwendig ist, sofern auf dem Application Session Layer eine solche Aufgabe erwünscht ist. Das erlaubt einem Provider die Vorbereitungen für Mobility in seinem Netz ohne großen Aufwand für jede Session ablaufen zu lassen, ohne das Netz übermäßig zu belasten. Erst wenn der Mobility-Fall wirklich eintritt, müssen weitere Netzwerkknoten auf Session Control Layer und/oder Application Session Layer aktiv werden.

Die Erfindung wird anhand der folgenden Zeichnungen genauer erklärt, wobei

Abb.1 ein IMS Netzsystem nach dem Stand der Technik darstellt.
Abb. 2 stellt Verbindungen durch ein Netzwerksystem dar.
Abb. 3 stellt die Verbindungen dar, die durch das beanspruchte Verfahren hergestellt wurden.
Abb. 4 stellt das alternative Verbindungstopologien, die nach dem beanspruchten Verfahren etabliert werden können, dar.
Abb. 5, 6, und 7 stellen das Sammeln und Propagieren von Topologie-Referenzinformation nach dem beanspruchten Verfahren dar.

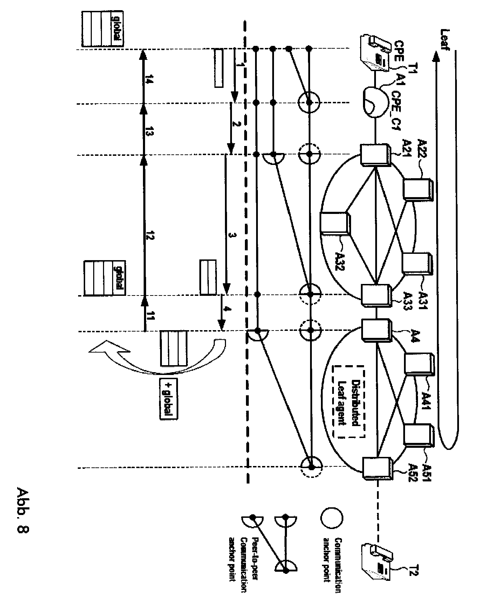

Abb. 8 stellt ein Mobility-Szenario in einem Peer to Peer Netz wie in Abb. 3 dar.

Die Netzknoten sind üblicherweise in administrative Domänen zusammengefasst, in denen die Netzknoten verwaltet werden. Netzknoten an Domänengrenzen können mit Netzknoten aus anderen Domänen verbunden sein, die Netzübergänge.

Ein primitiver Formalismus definiert die Menge der Netzknoten N als die Knoten die potentiell beteiligten Knoten bei einem Verbindungsaufbau, die potentiellen Verbindungen durch V, eine Teilmenge von NxN, und die Domänen D, Teilmengen von N, partitionieren die Menge der Netzknoten, d.h. die einzelnen Domänen sind disjunkt und die Vereinigung aller Domänen ist N.

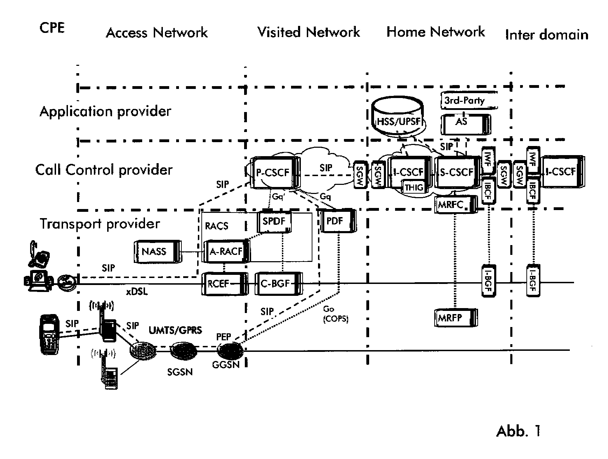

In Abb. 1 ist ein reales Netzwerksystem dargestellt mit den Domänen CPE (Customer Premise Equipment), Access Network, Visited Network und Home Network. Es sind reale Netzwerkknoten dargestellt wie Endgeräte, Basisstationen, Digital Subscriber Line Modems, Resource Control Enforcement Function RCEF, Resource and Admission Control RACS, Call Server Control Function CSCF, Signalling Gateways SGW, Media Resource Function Controller MRFC, Policy Decision Function PDF, Media Resource Function Processor MRFP, Interconnection Border Control Function IBCF, Breakout Gateway Control Function BGCF, Application Server AS, etc. Eine detaillierte Einführung in dieses System mit Verweisen auf weiterführende Literatur findet man unter http://en.wikipedia.org/wiki/IP_Multimedia_Subsystem.

Im Weiteren werden diese Netzwerkknoten zu den oben definierten Knoten aus der Menge N abstrahiert. Die Verbindungen zwischen den Knoten sind technisch durch Kommunikationsprotokolle wie das Session Initialization Protocol (SIP) realisiert. Von physikalischen, administrativen und Implementierungs-Aspekten soll ebenso abstrahiert werden. Lediglich die Art der Denotation wird durch diese Aspekte teilweise bestimmt. So kann ein Knoten beispielsweise durch eine Media Access Control Adresse, eine Internet Protocol Adresse, Domain Name, URL/URI/URN oder eine SIP Adresse identifiziert werden.

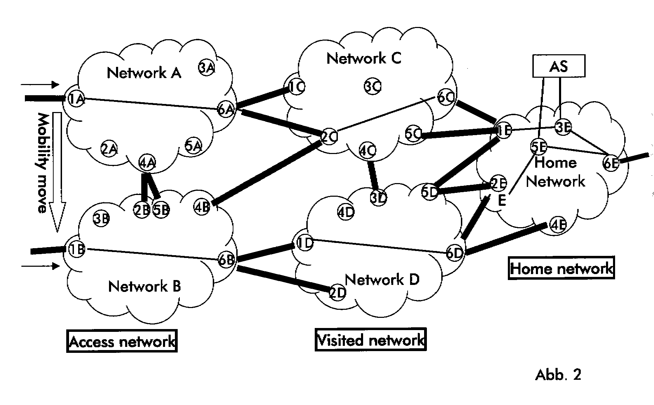

Abb. 2 zeigt ein Mobility Szenario bei dem ein Wechsel "Mobility move" eines mobilen Gerätes von der Domäne A zur Domäne B erfolgt. In der ersten Domäne A sind die Knoten 1A, 2A, ..., 6A vorhanden, wobei die Knoten 4A und 6A über Übergänge zu anderen Domänen verfügen. Übergänge zwischen Domänen sind durch fette Linien dargestellt, Verbindungen innerhalb einer Domäne durch dünne Linien.

Es ist eine Verbindung für eine Session zu einem Applikationsserver AS dargestellt, die fortgesetzt werden kann, beispielsweise zum Endgerät eines weiteren Teilnehmers.

Eine Verbindung, hier ein Signalisierungspfad, führt von dem Knoten 1A zu Knoten 6A in Domäne A, dann zu Knoten 2C in Domäne C. Von Knoten 2C nach Knoten 6C innerhalb Domäne C, dann weite zu Knoten 1 E in Domäne E über Knoten 3E zum Knoten 6E und zum Applikationsserver AS. Vom Knoten 6E führt die Verbindung weiter.

Findet nun der oben genannte Wechsel statt, so wird eine neue Verbindung zu Knoten 1 B etabliert. Die Domäne B entscheidet das Endgerät über einen Pfad über die Domäne D zu erreichen. Es wird eine Verbindung von Knoten 1 B zu 6B innerhalb Domäne B etabliert. Weiter von Knoten 6B zu Knoten 1 D in der Domäne D, dann zu Knoten 2E in der Domäne E. Von dort über Knoten 5E, der mit dem Applikationsserver AS verbunden ist, zu dem Knoten 6E.

Das Etablieren eines zweiten Pfades wird durch entscheidende Entitäten, Controller genannt, innerhalb der Domänen forciert. Der Pfad nach dem Wechsel ist ein vollständig neuer. Um die bereits bestehende Session wiederaufzunehmen, müssen alle beteiligten Instanzen, insbesondere der Applikationsserver und das Endgerät wiederaufsetzen, also die bestandene Session über einen anderen Pfad fortsetzen. Das wird meist durch Verwerfen der bestandenen Session und eine Neuinstantiierung einer Session, in welcher der alte Sessions-Kontext eingepflegt wird, bewerkstelligt.

Das bedeutet, dass das Ändern der Verbindungstopologie am einen Ende weit reichende Auswirkungen am anderen Ende hat. Diese nichtlokale Eigenschaft ist unerwünscht.

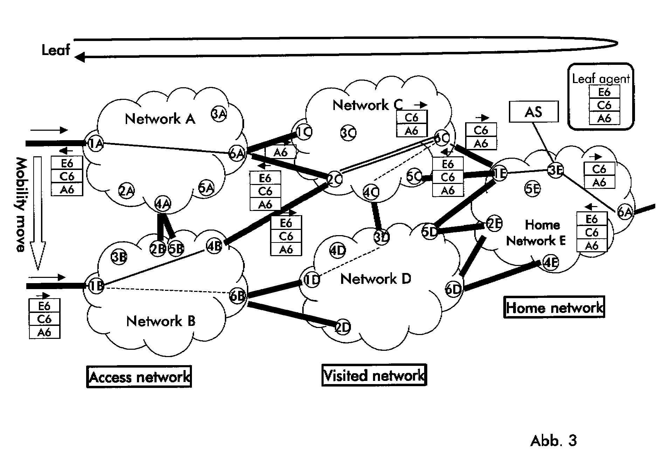

Um diesen Effekt zu vermeiden wird beim Etablieren des ersten Pfades die Verbindungstopologie explizit protokolliert und der initiierenden Instanz bekannt gemacht. Also während der Pfad von 1A über 6A über 2B über 6C über 1 E über 3E zum Applikationsserver AS und weiter aufgebaut wird sammelt ein Agent "Leaf agent" pfadcharakterisierende Information, die Topologie-Referenzinformation. Das wird in Abb. 3 gezeigt.

Diese Topologie-Referenzinformation kann beispielsweise aus dem Knoten bestehen an dem die jeweilige Domäne verlassen wird (wie in der Abbildung dargestellt): also die Knoten 6A, 6C, 6E. Die Information kann auch den vollen Pfad umfassen. Wünschenswert ist für die Topologie-Referenzinformation, dass in jeder beteiligten Domäne wenigstens ein Knoten als Wiederaufsetzpunkt die Topologie-Referenzinformation vorhält.

Erfolgt nun der oben beschriebene Wechsel, so kann der Domäne B die Topologie-Referenzinformation bereitgestellt werden, was den Controller der Domäne in die Lage versetzt, eine Entscheidung zu treffen, so dass ein Teil der vorherigen Verbindung bevorzugt wiederaufgenommen wird.

In der Abbildung 3 ist dargestellt, dass die Domäne B eine Verbindung über 4B mit Knoten 2C aus der Domäne C etabliert. Dort wird die bestehende Session zugeordnet indem der ursprüngliche Restpfad von Knoten 2C nach Knoten 6E wiederverwendet wird. Die Änderung des Präfixes des Pfades bleibt für den Applikationsserver AS vorzugsweise transparent. Alternativ ist ein gestrichelter Verbindungspfad über Knoten 6B, 1 D, 3D, 4C zu 6C möglich, wenn der Domänen-Controller von der Domäne B entscheidet über die Domäne D eine Verbindung zu etablieren.

Dieses transparente Wiederaufsetzen wird durch bereitstellen der ursprünglichen Pfad-Information, generell durch eine Topologie-Referenzinformation die Anchor Points umfasst, ermöglicht. Vorteilhafterweise werden diese Anchor Points (also die wesentlichen Netzknoten) auf einem Verbindungs- und/oder Signalisierungspfad beim Verbindungsaufbau gesammelt und den beteiligten Netzwerkentitäten insbesondere dem mobilen Knoten mitgeteilt.

Die Topologie-Referenzinformation ist durch Rechtecke mit Knotenbezeichnern dargestellt. Die Pfeile illustrieren die Propagationsrichtung. Beim Aufbauen einer Verbindung wird der Verbindungspfad sukzessiv inkrementell ggf. partiell protokolliert und dem Leaf (Endgerät) und den anderen beteiligten als Leaf Agent agierende Knoten bekannt gemacht.

Mit der Topologie-Referenzinformation können wieder Anchor Points, also protokollierte Knoten, erreicht werden, um eine bestehende Session über einen Pfad mit minimal geändertem Präfix fortzusetzen.

Durch das Bereitstellen von Topologie-Referenzinformation werden die Controller von Domänen in die Lage versetzt bevorzugt Verbindungen zu bestehenden Pfaden zu finden. Die Referenzinformation ermöglicht weiter ein vorteilhafteres Routen, da das Traversieren durch opake Domänen den Controllern teilweise transparent bleibt.

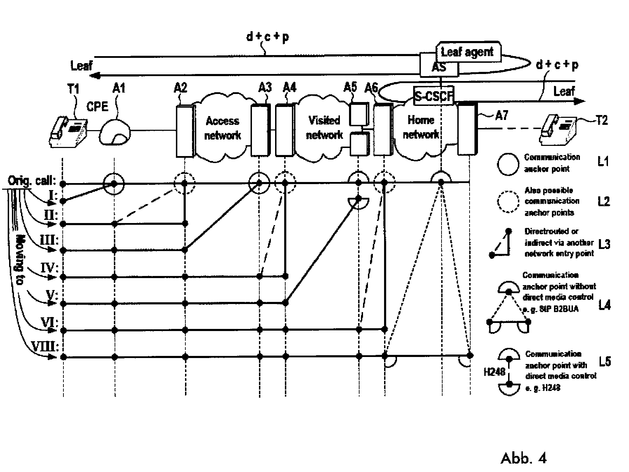

In Abb. 4 sind mögliche Verbindungsalternativen in einem Mobility Szenario aufgezeigt. Ein Endgerät T1 wird über eine Private Nebenstellenanlage (IP-PABX, IAD) A1 mit einem Access Server A2 einer Domäne verbunden, dann weiter über ein Knoten A3 zu einem Knoten A4 aus einer weiteren Domäne. Knoten A4 ist mit einem nächsten Knoten A5 verbunden, dieser mit einem Knoten A6 und der mit einem Knoten A7. Über weitere Knoten und/oder Domänen ist der Knoten A7 mit einem zweiten Endgerät T2 verbunden.

Dieser Verbindungspfad wird von einem Leaf Agent als Topologie-Referenzinformation d+c+p protokolliert und dem Endgeräte T1 zur Verfügung gestellt.

Die verschiedenen Knoten erlauben unterschiedliche alternative Pfade und unterstützen unterschiedliche Funktionen was durch unterschiedliche Symbole dargestellt ist. Die Legende L1 zeigt dass die IP-BABX ein einfacher Anchor Point ist. Die Legende L2 zeigt, dass die Domäne alternative Session Border A2 besitzt. Die Legende L3 zeigt, ob als Zugang zu einer Domäne derselbe Entry Point oder alternative Entry Points verwendet werden können. Der Session Border A2 ist eine abstrahierte logische Form aller Entry Points für Teilnehmer wie beispielsweise Session Border Controller. Legende L4 und L5 zeigen weitere Varianten an Anchor Points.

Jeder der protokollierten Anchor Points in der Topologie-Referenzinformation bietet alternative Aufsetzpunkte in den Mobility-Szenarien I bis VIII.

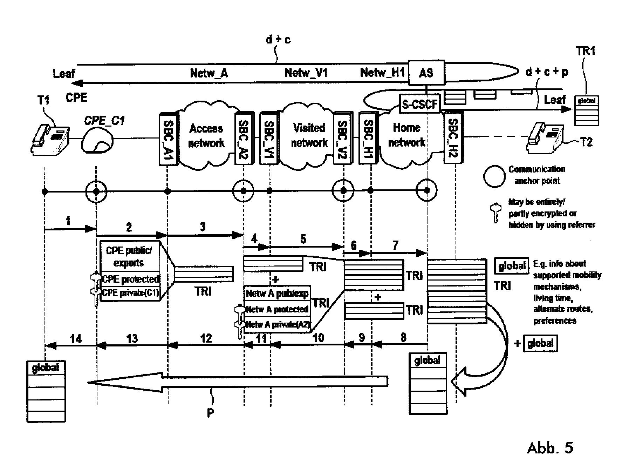

Abb. 5 konkretisiert das oben beschriebene Szenario indem die Knoten durch ein Endgerät T1, eine IP-PABX CPE_C1, einem Session Border Controller SBC_A1 und einem zweiten Session Border Controller SBC_A2 aus einer ersten Access Network Domäne Netw_A. Weiter sind die Session Border Controller SBC_V1 und SBC_V2 aus einer weiteren Domäne Netw_V1 dargestellt, sowie die Session Border Controller SBC_H1 und SBC_H2 aus der Home Domäne Netw_H1 von dem zweiten Endgerät T2. Dabei sind das IP-PABX CPE_C1, der zweite Session Border Controller SBC_A2 und ein S-CSCF im der Home Domäne Netw_H1 Anchor Points.

Im oberen Teil der Abbildung ist analog zur Abb. 4 dargestellt wie die Topologie-Referenzinformation propagiert wird. Im unteren Teil der Abb. 5 ist in einem Message Sequence Chart exemplarisch dargestellt aus dem die Zusammensetzung und das Propagieren im Detail hervorgeht. Das erste Endgerät initiiert 1 eine Session. Es wird eine Aufforderung zur IP-PABX CPE_C1 geschickt 1. Das IP-PABX CPE_C1 propagiert 2 die Topologie-Referenzinformation weiter beim Verbindungsinitialisieren 2 zum nächsten Anchor Point dem Session Border Controller SBC_A1. Die Topologie-Referenzinformation setzt sich aus öffentlichen und privaten Informationen zusammen. Die Topologie-Referenzinformation wird weiter während der Initialisierung in der ersten Domäne Netw_A zum nächsten Session Border Controller SBC_A2 propagiert 3. Von dort wird die um die aus dieser Domäne bekannt gemachten Anchor Points ergänzte Topologie-Referenzinformation zum nächsten Session Border Controller SBC_V1 in der nächsten Domäne Netw_V1 propagiert 4. Private Informationen sind vorzugsweise verschlüsselt, was durch die Schlüssel in der Grafik angedeutet wird. Durch die Domäne Netw_V1 wird die Topologie-Referenzinformation weiter propagiert 5 - bis zur Domänengrenze, dem Session Border Controller SBC_V2. Beim Propagieren wird auch in dieser Domäne die Topologie-Referenzinformation um weitere Anchor Points ergänzt. Derselbe Vorgang spielt sich auch in der letzten der dargestellten Domänen Netw_H1 ab: Während der Propagation wird die Topologie-Referenzinformation um weitere Anchor Points ergänzt. Schließlich werden noch globale Informationen wie Präferenzen oder unterstützte Mechanismen, alternative Routen oder Gültigkeitsinformationen angehängt, bevor das Endgeräte (Leaf Node) die komplette Topologie Referenzinformation durch Rück-Propagation 8 - 14 auf dem etablierten Pfad erhält.

Am Ende des beschriebenen Szenarios hat das Endgeräte T1 die Topologie-Referenzinformation, dass die Session über die Anchor Points CPE_C1, SBC_A2 SBC_V2 und AS etabliert wurde.

Wird die so etablierte Verbindung unterbrochen, so kann ein Endgerät oder ein Leaf Agent, der über die Topologie-Referenzinformation verfügt, die intelligent Herstellung eine vorteilhafte Verbindung veranlassen.

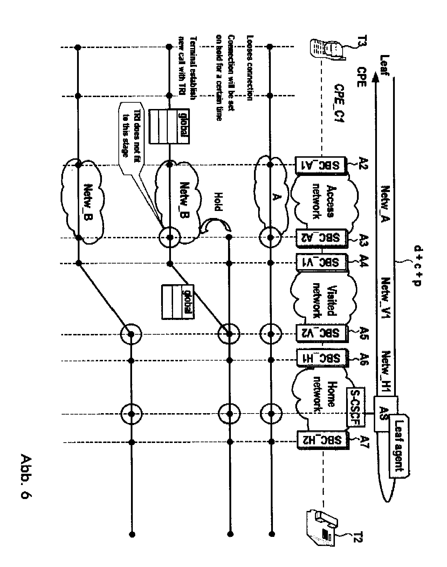

Wird beispielsweise wie in Abb. 6 dargestellt, die Verbindung zum Access Network, also die Domäne Netw_A unterbrochen, so kann ein verbleibender Anchor Point, das Endgerät oder ein Neues Endgerät oder irgend ein anderer Leaf Agent eine neue Verbindung unter Verwendung der Topologie-Referenzinformation veranlassen. In der Abbildung etabliert ein neues Endgerät T3, das über die Topologie-Referenzinformation verfügt, eine Verbindung über eine zweite Domäne Netw_B. Beim Wiederaufnehmen der Verbindung durch die Domäne Netw_V1 wird der Domänencontroller über den Anchor Point Session Border Controller SBC_V2 informiert, um den bestehenden Pfad wieder zu verwenden.

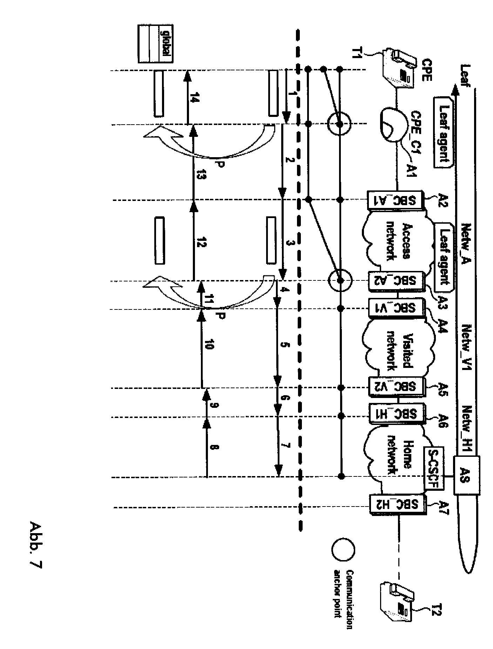

In Abb. 7 ist dargestellt wie in einem Mobility Szenario wieder aufgesetzt werden kann und welche Konsequenzen das für die Topologie-Referenzinformation hat. Wird zum Beispiel bereits beim ersten Anchor Point der ursprüngliche Pfad weiterverwendet, so ändert sich lediglich wenig Anteile der Topologie-Referenzinformation. Auch diese Änderungen werden vorzugsweise über den Verbindungspfad an die Anchor Points propagiert. Im schlechtesten Fall wird der Applikationsserver AS mit einer vollständig neuen Verbindungsinformation konfrontiert. Die Abbildung illustriert den Vorteil der Erfindung, dass nicht mehr die Applikationsserver mit Mobility Szenarien belastet werden, sondern sich die Belastung im Netzwerk - genauer gesagt über die Domänen - verteilt und dort lokal gehandhabt werden kann - als weitgehend transparent für die bestehende Verbindung.

Die Referenz-Information kann vorzugsweise mit globalen Eigenschaften wie Quality of Service, oder Service-Konsumierung oder Kosten attributiert sein. Auch können Teile der Referenz-Information verschlüsselt sein, so dass nicht jede Domäne von jeder anderen Domäne Topologieinformation erkunden kann. Diese Topologieinformation kann auch innerhalb eines Domains gehalten werden, beispielsweise innerhalb eines dedizierten Knotens, einem Server, und via eines Hash-Codes wiedergefunden werden. Vorzugsweise wird die Referenz-Information aber in den EndGeräten vorgehalten. Alternativ kann ein Storing-Agent, der oben genannte Leaf Agent, diese Information verwalten und vorhalten, insbesondere, wenn ein Endgerät keine Topologie-Referenzinformation handhaben kann.

Wird eine Netzressource benötigt, so kann ältere vorhandene Referenz-Information genutzt werden um den nächstgelegenen geeigneten Netzzugang, einem Anchor Point, zu identifizieren. Das entlastet den Domänen-Controller und kann sogar den Verbindungsaufbau beschleunigen.

Konkrete Topologie-Referenzinformation sind beispielsweise domainabhängige Routinginformationen oder sessionabhängige Referenzen, die während der Registrierungs- oder der Authentisierungs-Phase , während der Etablierung einer Session oder während einer andauernden Session von einem Kommunikationsgerät erhoben/ermittelt werden.

Diese Information kann vorzugsweise nach Zugangsrechten (Access Rights) oder nach Domains strukturiert werden. Domains können die Topologie-Referenzinformation von andern Kommunikationsgeräten bereitstellen, so dass die Topologie-Referenzinformation im Netz propagiert.

Ebenso kann Topologie-Referenzinformation beim Etablieren einer Session (Session Establishment) erweitert werden. So könnten beispielsweise domainabhängige Informationen und sessionabhängige Informationen (Dynamic Case) die Topologie-Referenzinformation ergänzen.

Auch kann während einer Session weitere ergänzende Topologie-Referenzinformation ermittelt werden. Die Topologie-Referenzinformation kann durch Anfügen von globalen Eigenschaften wie beispielsweise einem Zeitstempel, einer Gültigkeitsdauer (lifetime), einen Namen einer globalen Identität, etc. ergänzt werden.

Vorzugsweise werden Teile der Topologie-Referenzinformation verschlüsselt um Sie beispielsweise vor fremden, konkurrierenden Domänen zu verheimlichen.

Die Topologie-Referenzinformation kann in einem Netzwerk - also einem Server-System oder einem Agenten-System - gehalten werden. Zugänglich könnte diese Information beispielsweise über eine Referenz, beispielsweise einen Hash-Code, zugänglich gemacht werden.

Eine ermittelte Topologie-Referenzinformation könnte auch abhängig von Privilegien eines Subscribers zugänglich sein. Die Privilegien könnten bei der Initialisierung einer neuen Session verifiziert werden.

Ebenso kann das oben genannte Kommunikationsgerät selbst die Topologie-Referenzinformation vorhalten.

Vorzugsweise stellet ein mit dem Kommunikationsgerät assoziierter Storing Agent die Information bereit. Der Agent könnte alternativ auf einem Applikationsserver gehosted sein.

Weitere Kommunikationsgeräte könnten ihre Topologie-Referenzinformation zur Verfügung stellen. Beispielsweise könnte ein auf einen Nutzer registriertes Telefon Referenz-Information bereitstellen, so dass in einem Mobility Szenario die Session mit diesem Benutzer zu einem geeigneten Endgerät automatisch transferiert wird.

Im Allgemeinen kann die Topologie-Referenzinformation genutzt werden um einen in einem Szenario nächstgelegenen geeigneten Anchor Point oder Domänenübergang zu finden.

Beispielsweise könnten die Bestimmung der Netzwerkentitäten, die für Mobility-Management verantwortlich sind, oder die Netzwerkentitäten, die einen speziellen Service erbringen, so schneller identifiziert werden.

Vorzugsweise wird ein dezentraler Ansatz verfolgt, der die Verantwortlichkeit auf die Anchor Points auf einem Kommunikationspfad delegiert. Das hat den Vorteil, dass die bei einer Etablierung einer Session im Kommunikations-Netzwerk beteiligten Anchor Points die Topologie-Referenzinformation erfassen oder halten und propagieren.

Mit einem im Netzwerk bekannt gemachten Storage Agent ist es unter anderem auch möglich Hand-off Szenarien zu unterstützen wie beispielsweise prädiktiv - erlernt aus vergangenen Verbindungsszenarios - einen alternativen Pfad zu anhand der Topologie-Referenzinformation zu routen.

Beteiligten Netzwerkentitäten (auf dem Pfad), also potentielle Anchor Points, können die Topologie-Referenzinformation ad hoc. erweitern. Die Topologie-Referenzinformation ist bevorzugt so strukturiert, dass private Information von dem betreffenden Anchor Point gehalten wird oder durch seine Domain geschützt ist; Öffentliche Information wird exportiert.

Eine Konkrete XML (Extendable Markup Language) Struktur könnte wie folgt aussehen:

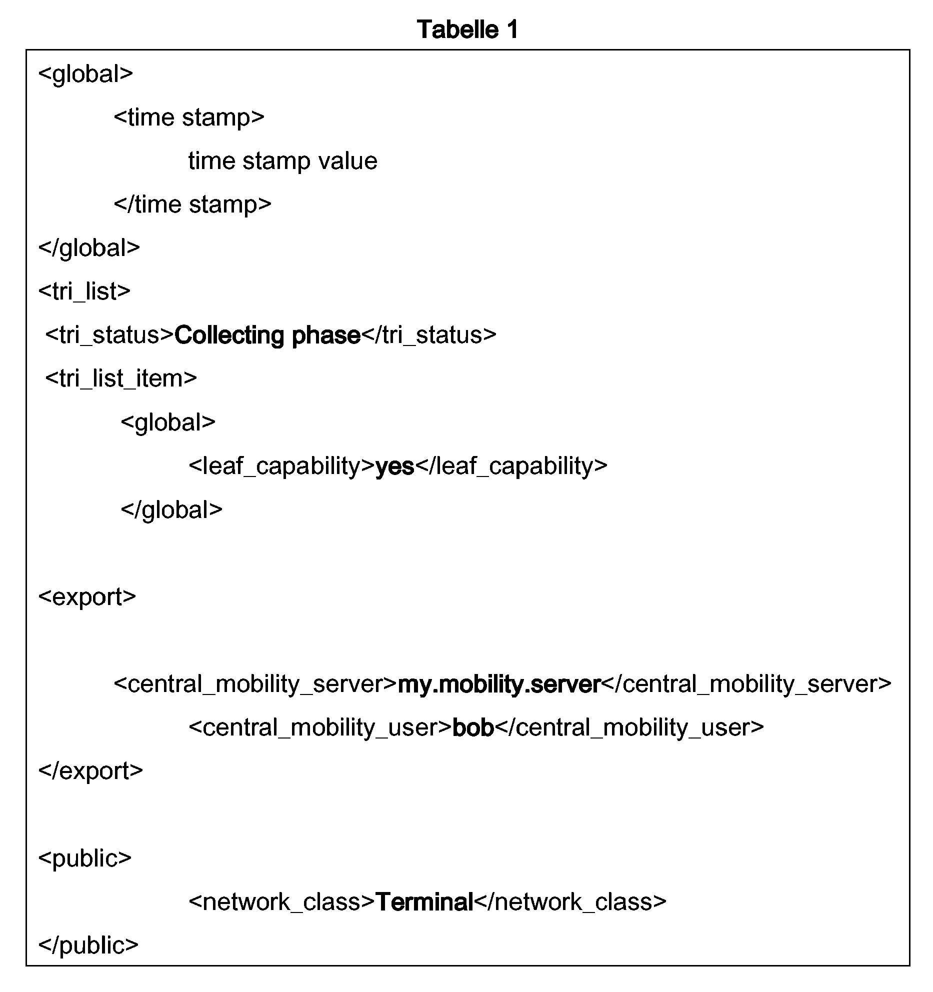

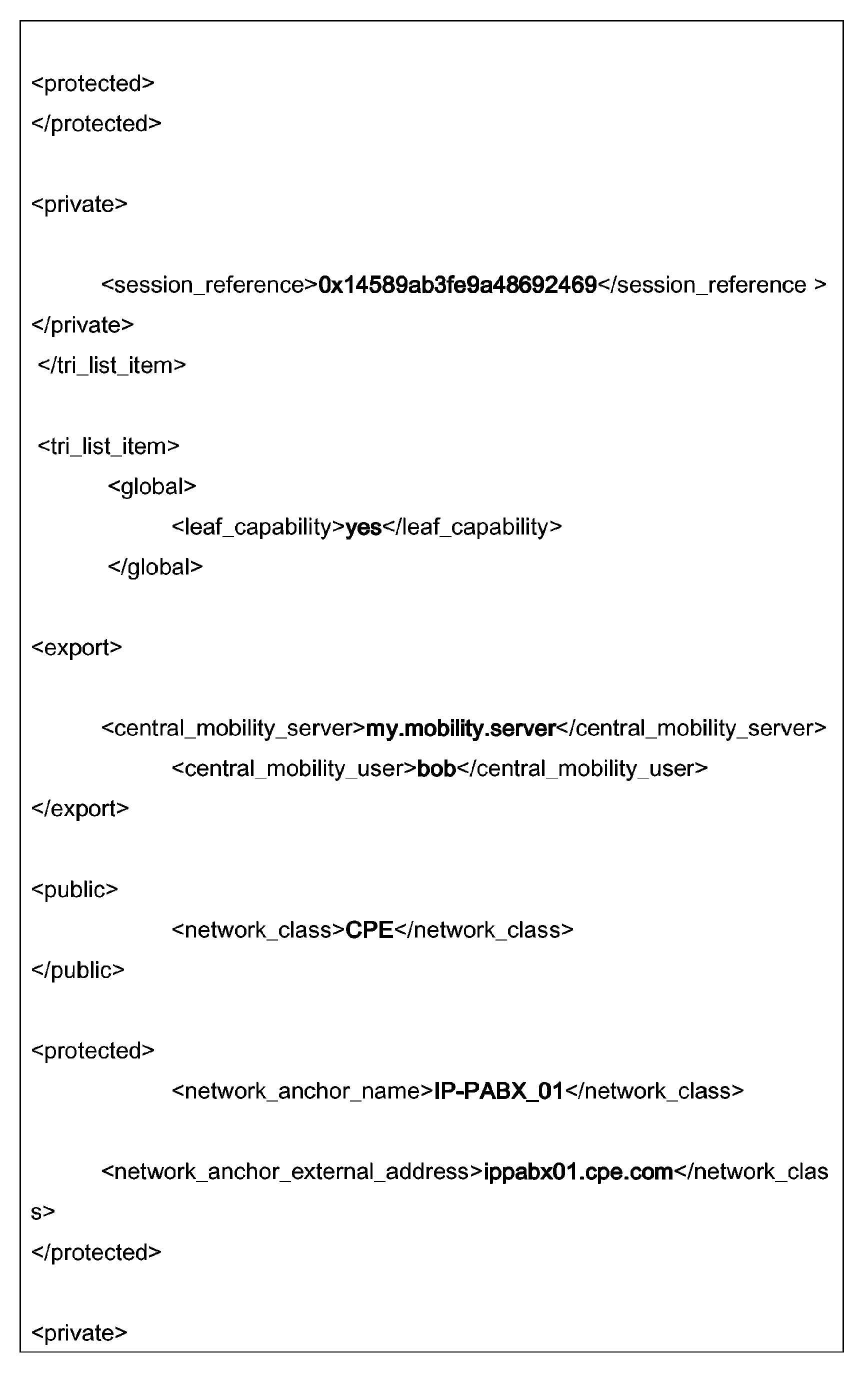

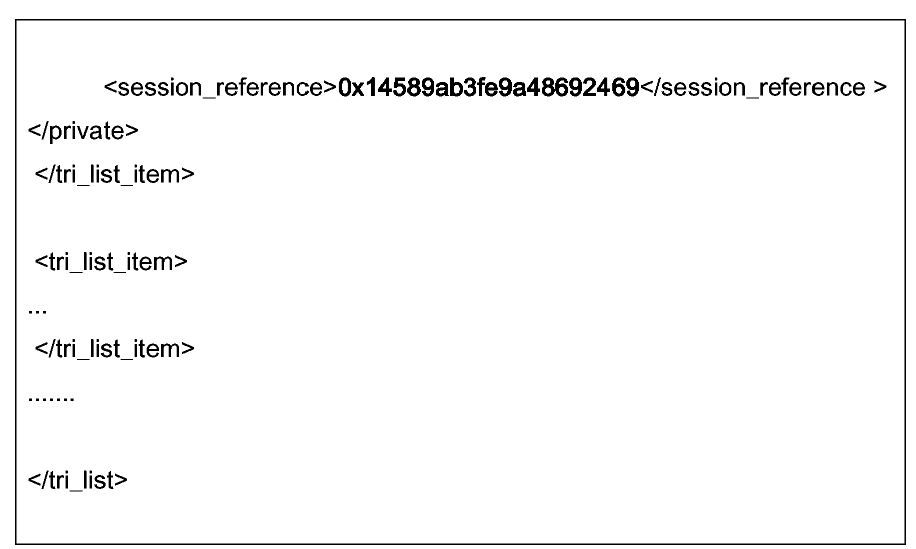

Die Anreicherung oder die Erweiterung von Topologie-Referenzinformation kann dynamisch je nach situativen Kontexten erfolgen wie beispielsweise der Verfügbarkeit von Ressourcen in einer Domain. Die Topologie-Referenzinformation ist nicht notwendigerweise vollständig. Selbst partielle Topologie-Referenzinformation kann Szenarien unterstützen. Dieser Fall tritt dann ein, wenn beispielsweise eine ganze Domäne oder ein Anchor Point schlicht keine Topologie-Referenzinformation offenbart. In diesem Fall ist die Topologie partiell transparent.

Um den Gebrauch und den Nutzen der Topologie-Referenzinformation zu illustrieren werden einige Fallbeispiele aufgezeigt: Das erste Fallbeispiel betrifft Personal Mobility mit einem Endgerät das mehrere Zugangstechnologien unterstützt. Beispielsweise könnte das Endgerät ein mobiles Telefon welches sowohl GSM als auch DECT unterstützt sein. Das Telefon ist mit einer IP-PABX mit DECT Funktionalität verbunden. Befindet sich das Endgerät in Reichweite der IP-PABX (home region), so wird bevorzugt die DECT Verbindung gewählt und nicht eine GSM Verbindung.

Die bei Rufen erhobene, gesammelte und bereitgestellte Topologie-Referenzinformation ermöglicht eine Änderung der Verbindung in einem frühen Stadium, nämlich genau dann, wenn das Endgerät feststellt das es sich in der Reichweite der IP-PABX, einem alternativen Anchor Point, befindet.

Dazu konfiguriert der Storage Agent anhand der Topologie-Referenzinformation ortsabhängig einen DECT Scan-Modus. Wird eine DECT Verbindung erkannt, so initialisiert das Endgerät eine DECT Verbindung mit der Intension einen bestehenden Call zu übernehmen.

Verliert ein Endgerät eine Verbindung oder degradiert die Quality of Service inakzeptabel, wird ein Verbindungsaufbau zu einem alternativen Access Point initiiert. Die Topologie-Referenzinformation ermöglich es frühestmöglich alternative Verbindungen zu etablieren. In so einer Situation wird ein bestehender Call vorzugsweise gehalten bis die alternative Verbindung etabliert ist um den Call dann zu übergeben. Insbesondere legt die Erfindung ein dezentrales Sammeln von Informationen ohne Verletzen von domainspezifischen Informationen nahe. Das ermöglicht neuartige Services, im speziellen bei Netzen mit unterschiedlichen Domains oder Peer-to-peer Netzen, wie beispielsweise eine Presence Service Implementierung für ein Peer-to-peer Netz basierend auf diesem Ansatz.

## Patentansprüche

1. Ein Verfahren zum Ermitteln von Topologie-Referenzinformation (TRI) einer Verbindung, die von einem Endgerät über ein Netz von Anchor Points geroutet wird, **dadurch gekennzeichnet dass** auf einem Verbindungspfad Information über verwendete Anchor Points als Topologie-Referenzinformation (TRI) aggregiert (1, ..., 7) werden.

2. Ein Verfahren zum Etablieren einer Verbindung, **dadurch gekennzeichnet dass** ein Anchor Point anhand von Topologie-Referenzinformation (TRI) identifiziert und ausgewählt wird, wobei die Topologie-Referenzinformation (TRI)im Endgerät oder im Netz vorgehalten wird und Information über eine bereits etablierte Verbindung bereitstellt.

3. Ein Verfahren zum Finden eines Anchor Points, **dadurch gekennzeichnet dass** ein Anchor Point anhand von Topologie-Referenzinformation (TRI) identifiziert und ausgewählt wird, wobei die Topologie-Referenzinformation (TRI) im Endgerät oder im Netz vorgehalten wird und Information über bereits benutzte Anchor Points bereitstellt.

4. Das Verfahren nach Anspruch 1 oder 2 oder 3 **dadurch gekennzeichnet, dass** ein Teil der Topologie-Referenzinformation (TRI) öffentlich (, public') ist und ein Teil (, protected' ,, private') durch Verschlüsselung geheim gehalten wird.

5. Das Verfahren nach Anspruch 1 oder 2 oder 3, **dadurch gekennzeichnet dass** ein Teil der Topologie-Referenzinformation (TRI) im Netz vorgehalten wird.

6. Das Verfahren nach Anspruch 2 oder 3 **dadurch gekennzeichnet, dass** die Topologie-Referenzinformation (TRI) zur Bestimmung eines Domänenübergangs verwendet wird.

7. Das Verfahren nach Anspruch 1 **dadurch gekennzeichnet, dass** das Aggregieren in der Registrierungsphase, in der Authentifizierungsphase, beim Initialisieren einer Session oder während einer Session erfolgt.

8. Ein Kommunikationssystem umfassend ein Endgerät und ein Netz von Anchor Points **dadurch gekennzeichnet, dass** das Kommunikationssystem Mittel zum Aggregieren von Topologie-Referenzinformation (TRI) einer Verbindung, die von einem Endgerät über das Netz von Anchor Points geroutet wird, aufweist, wobei die Mittel so ausgestaltet sind, dass auf einem Verbindungspfad Information über verwendete Anchor Points als Topologie-Referenzinformation (TRI) aggregiert werden, und dass die Mittel zum Identifizieren und Auswählen eines Anchor Point oder eines Domänenüberganges anhand der Topologie-Referenzinformation (TRI) geeignet sind.

9. Ein Netzwerkknoten (Leaf agent) **dadurch charakterisiert, dass** der Netzwerkknoten Mittel zum Erzeugen, Aggregieren und Propagieren (1, ..., 14) von Topologie-Referenzinformation (TRI) zu einer Verbindung.

10. Der Netzwerkknoten (Leaf agent) **dadurch charakterisiert, dass** er Mittel zum Vorhalten von Topologie-Referenzinformation (TRI) aufweist.

11. Ein Endgerät (T1) **dadurch gekennzeichnet, dass** das Endgerät Mittel zum Vorhalten von Topologie-Referenzinformation (TRI) einer Verbindung aufweist.

12. Ein Server-System (A2, A3,..., A21, A22, A31, A32, A33, ...) **dadurch gekennzeichnet, dass** das Server-System Mittel zum Vorhalten von Topologie-Referenzinformation (TRI) einer Verbindung aufweist.

13. Ein Computer Software Produkt umfassend Programmiermittel **dadurch charakterisiert, dass** die Programmiermittel zum Ausführen des Verfahrens nach Anspruch 1 oder 2 geeignet sind.
